# EUROPEAN PATENT APPLICATION

(11) **EP 4 303 951 A1**
(43) Date of publication of application: **10.01.2024**
(21) Application number: 22305999.9
(22) Date of filing: 04.07.2022
(51) Int. Cl.: H01M 4/131, H01M 4/134, H01M 4/40, H01M 4/525, H01M 4/62, H01M 10/0525, H01M 10/0562

(54) **BUFFER LAYER FOR ALL-SOLID-STATE BATTERIES**

(71) Applicant: Saint-Gobain Ceramics&Plastics, Inc., Worcester, MA 01615-0008 (US); Centre national de la recherche scientifique, 75016 Paris (FR)
(72) Inventor: OUSPENSKI, Vladimir, Aubervilliers (FR); ASSAT, Gaurav, Aubervilliers (FR); TARASCON, Jean-Marie, Paris (FR); KOC, Tunkay, Paris (FR); LETHIEN, Christophe, Valenciennes (FR); HALLOT, Maxime, Valenciennes (FR)
(74) Representative: Saint-Gobain Recherche

(57) **Abstract**

The present invention relates to an all-solid-state-battery (ASSB) comprising an anode comprising a first solid electrolyte, a cathode composite comprising a second solid electrolyte, a solid electrolyte chosen from the group consisting in the first and the second solid electrolyte, and at least one buffer layer, in contact with a surface of the solid electrolyte, wherein when the solid electrolyte is the first solid electrolyte, one buffer layer is at the interface of said electrolyte with the cathode, and when the solid electrolyte is the second solid electrolyte, one buffer layer is at the interface of said electrolyte with the anode, wherein the first electrolyte is chosen from a sulphide solid electrolyte and a lithium oxide solid electrolyte, wherein the second electrolyte is a halide solid electrolyte, and wherein the buffer layer has a thickness ranging from 0.5 to less than 10 nm. The invention further pertains to an anode assembly, a cathode assembly and an electrolyte assembly comprising at least one buffer layer. The invention also relates to a process for making an ASSB or an assembly according to the invention wherein the buffer layer is deposited by a vapor deposition based method.

## Description

### Technical field

The present invention belongs to the field of all-solid-state rechargeable batteries (ASSB) and in particular relates to their individual constituents such as an anode, a cathode and a solid electrolyte, as well as the interactions between said components.

### Technical background

ASSBs are of particular interest as a substitute to traditional Li-Ion batteries, especially since they raise fewer safety concerns and have higher capacities.

To obtain an ASSB, a solid electrolyte is used instead of the liquid electrolytes found in Li-Ion batteries. ASSBs also use Li-metal anodes and high energy NMC cathode particles, said particles being incorporated into the solid state electrolyte.

Such solid electrolyte is for example chosen from lithium thiophosphate (β-Li₃PS₄, LPS), argyrodite (Li₆PS₅Cl) such as described in H.J. Deiseroth, et al. "Li6PS5X: a class of crystalline Li-rich solids with an unusually high Li+ mobility." Angew. Chem. Int. Ed., 47 (2008), pp. 755-758 and halides, for example Li₃InCl₆, such as described in X. Li et al. "Air-stable Li3InCl6 electrolyte with high voltage compatibility for all-solid-state batteries." Energy Environ. Sci., 2019,12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawback of these compounds is their chemical and electro-chemical interactions with electrode materials.

Halide solid electrolytes are of particular interest since they display good ionic conductivity (above 2 mS/cm), high electro-chemical stability against oxidation at cathode side and a better compactibility (deformability) than other solid-state inorganic electrolytes.

However, halide solid electrolytes, while demonstrating good electrochemical resistance to high energy NMC cathode, are incompatible with Li-metal anodes, in particular Li-metal, and LiₓSi_{y}, which reduce the electrolytes to the metallic state.

Also, sulphide electrolytes, while having a high ionic conductivity and being compatible with a Li-metal anode, are not electrochemically stable with high energy NMC cathodes. Therefore, the degradation of capacity of sulphide based electrolytes is unavoidable during the operation of a battery wherein the electrolyte is a sulphide electrolyte.

Two other inconveniencies are associated with sulphide electolytes : the generation of toxic gas (HS) if the electrolyte is accidentally exposed to the moisture and a low surface contact wetting with NMS particles which makes it necessary to constantly apply a relatively high external compression pressure for maintaining the integrity of the battery sandwich.

These chemical and electrochemical interactions lead to the fast aging of ASSBs.

T. Koç, F. Marchini, G. Rousse, R. Dugas, and J.-M. Tarascon in "In Search of the Best Solid Electrolyte-Layered Oxide Pairing for Assembling Practical All-Solid-State Batteries." ACS Appl. Energy Mater. 2021, NV.4, N 12, pp.13575-13585, https://doi.org/10.1021/acsaem.1c02187 tackled the problem of the compatibility of the solid electrolytes with the electrodes of an ASSB by producing hetero-structured ionic conductors coupling a halide-based positive electrode, separated from an anode by an ionic conductor of argyrodite or LPS type which is more stable at the anode.

However, the direct halide-argyrodite interface proved to be unstable which yielded limited cycling performance for an ASSB produced with said hetero-structured electrolyte.

### Summary of the invention

### Technical problem

The invention thus offers to solve the technical problem of preventing the fast aging of an all-solid-state battery while maintaining a high energy capacity during charge/discharge cycles.

### Solution to the technical problem

Thus, according to a first aspect, the present invention relates to an all-solid-state-battery comprising:
- an anode comprising an anode active material and a first solid electrolyte,
- a cathode composite comprising a cathode active material and a second solid electrolyte,
- a solid electrolyte comprising a solid electrolyte material chosen from the group consisting in the first and the second solid electrolyte, and
- at least one buffer layer, in particular one or two buffer layer(s), in contact with a surface of the solid electrolyte material, wherein
   when the solid electrolyte material is the first solid electrolyte, one buffer layer is at the interface of said electrolyte with the cathode composite, and when the solid electrolyte material is the second solid electrolyte, one buffer layer is at the interface of said electrolyte with the anode,
   wherein the first electrolyte is chosen from a sulphide solid electrolyte and a lithium oxide solid electrolyte,
   wherein the second electrolyte is a halide solid electrolyte, and wherein the buffer layer has a thickness ranging from 0.5 to less than 10 nm.

According to a second aspect, the present invention also concerns an assembly comprising:
- a solid electrolyte comprising a solid electrolyte material chosen from the group consisting of a halide solid electrolyte, a sulphide solid electrolyte and a lithium oxide solid electrolyte, and
- at least one buffer layer, in particular one or two buffer layer(s), in contact with a surface of the solid electrolyte material,
wherein the buffer layer has a thickness ranging from 0.5 to less than 10 nm.

This second aspect may be referred to as "solid electrolyte assembly" herein after.

According to a third aspect, the present invention further pertains to an assembly comprising:
- an anode comprising an anode active material and a solid electrolyte chosen from a sulphide solid electrolyte and a lithium oxide solid electrolyte, and
- a buffer layer in contact with a surface of the anode composite,
wherein the buffer layer has a thickness ranging from 0.5 to less than 10 nm.

This third aspect may be referred to as "anode assembly" herein after.

According to a fourth aspect, the present invention also relates to an assembly comprising:
- a cathode composite comprising a cathode active material and a halide solid electrolyte, and
- a buffer layer in contact with a surface of the cathode composite,
wherein the buffer layer has a thickness ranging from 0.5 to less than 10 nm.

This fourth aspect may be referred to as "cathode assembly" herein after.

Both an anode and a cathode being electrodes, respectively a negative and a positive electrode, the above-mentioned third and fourth aspects may be collectively referred to as "electrode assembly" herein after.

An assembly or an all-solid-state battery (ASSB) according to the invention allows to provide ASSBs with a high energy capacity and a better retention of their capacity.

Finally, the present invention further concerns a process of making the all-solid-state-battery according to the invention or the assembly according to the invention, wherein the buffer layer is deposited by a vapor deposition based method such as Physical Vapor Deposition, Chemical Vapor Deposition or by Atomic Layer Deposition, preferably by Atomic Layer Deposition, onto at least one substrate chosen from the solid electrolyte, the anode composite and the cathode composite.

### Advantages of the invention

Indeed, the buffer layer allows to provide a physical separation between an electrolyte and the electrode material that said electrolyte is incompatible with which prevents any direct electro-chemical reaction between said compounds.

Furthermore, as it is apparent from the present specification, the buffer layer implemented according to the invention has good compatibility with most solid electrolytes, in particular halides and sulphides and an acceptable ionic conductivity.

The electric resistance of the buffer layer is particularly advantageous while the thickness of said layer ranges from 0.5 nm to less than 10 nm.

The implementation of a vapor deposition based method in a process according to the invention allows to control the thickness of the deposited buffer layer. In particular, the use of Atomic Layer Deposition (ALD) allows to provide incremental atomic layers and thus to control with extreme precision the thickness of the buffer layer.

The present invention makes the best of the properties of sulphide-based electrolytes on the anode side and halide-based electrolytes on the cathode side. It provides a cost efficient solution, readily implemented by known deposition techniques, in order to obtain a complete long-lasting high capacity all-solid-state battery.

### Brief description of the drawings

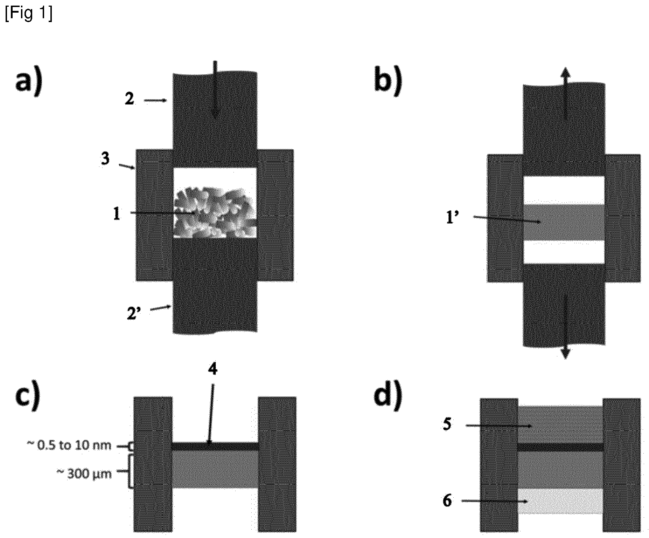

Fig 1 is a schematic representation of an embodiment of the procedure to introduce a buffer layer onto a surface of a solid electrolyte, comprising 4 steps a), b), c) and d). In step a), the solid electrolyte powder (1) is pressed between a mobile piston (2) and a fixed piston (2') within a cell body (3). In step b), the mobile piston (2) and the fixed piston (2') are removed and a densified solid electrolyte (1') that is about 300 µm thick is obtained. In step c), the buffer layer (4) is processed on the densified solid electrolyte (1') *via* Atomic Layer Deposition (ALD) technique. At the end of step c), a buffer layer (4) that has a thickness ranging from about 0.5 nm to about 10 nm is obtained. In step d), a positive electrode (5) is placed on the coated side, i.e. on the side of the buffer layer (4), of the densified solid electrolyte (1') while a negative electrode (6) is placed on the uncoated side of the densified solid electrolyte (1'), for assembling a full all-solid-state battery.

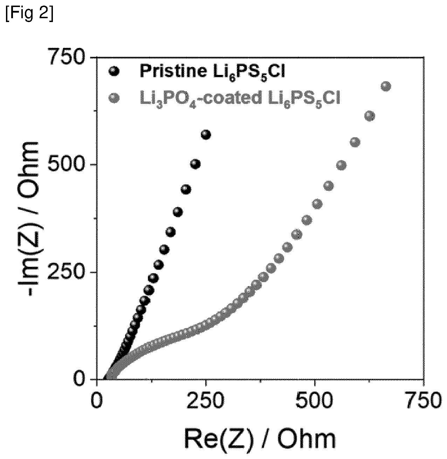

Fig 2 is a Nyquist graph of real impedance (Re(Z), Ohms) versus imaginary impedance (Z', Ohms), comparing between pristine Li₆PS₅Cl and single-side Li₃PO₄-coated Li₆PS₅Cl solid electrolytes wherein the coated electrolyte has a 1 nm thick buffer layer.

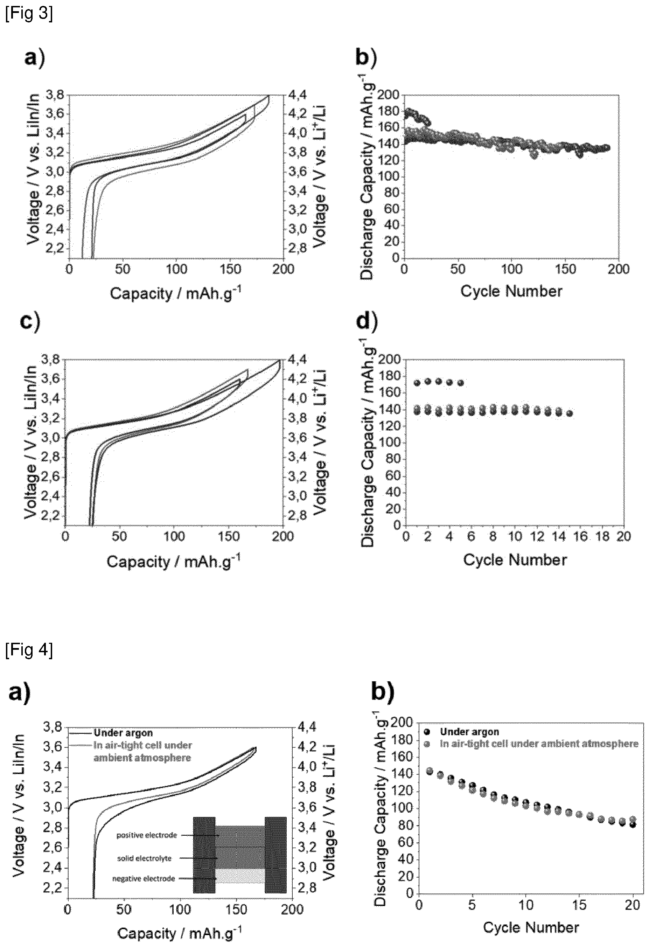

Fig 3 represents the electrochemical performances of a cell according to the example 1 of the invention at C/20 at room temperature containing 2 nm, for a) and b), and 1 nm, for c) and d), thickness of Li₃PO₄. a) and c) represent galvanostatic cycles. b) and d) are graphical representations of the discharge capacity (milliampere hours, mAh) versus cycle number, illustrating the capacity retention of the cells.
Fig 4 represents the electrochemical performances of a cell according to the comparative example at C/20 at room temperature both under argon and in an air-tight cell under ambient atmosphere. a) represents galvanostatic cycles. b) is a graphical representation of the discharge capacity (milliampere hours, mAh) versus cycle number, illustrating the change in discharge capacity with respect to the number of cycles in the cells.

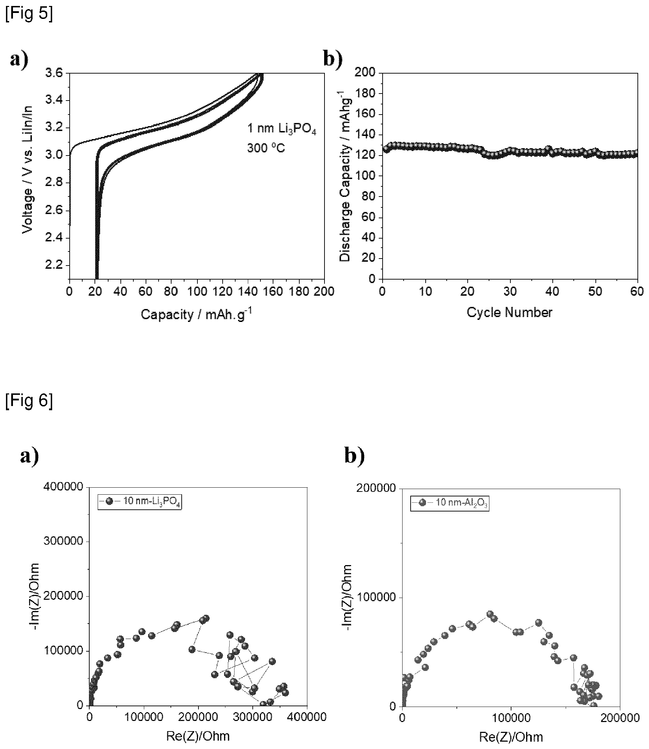

Fig 5 represents the electrochemical performances of a cell according to the example 2 of the invention at C/20 at room temperature containing two buffer layers of 1 nm thickness of Li₃PO₄. a) represents the galvanostatic cycling of the cell. b) is a graphical representation of the discharge capacity (milliampere hours, mAh) versus cycle number, illustrating the capacity retention of the cell.
Fig 6 is Nyquist graphs of real impedance (Re(Z), Ohms) versus imaginary impedance (Z', Ohms), established for Li₆PS₅Cl solid electrolytes coated with 10 nm thick buffer layers of Li₃PO₄, i.e. the comparative example 2 (Fig. 6a) and Al₂O₃, i.e. the comparative example 3 (Fig. 6b).

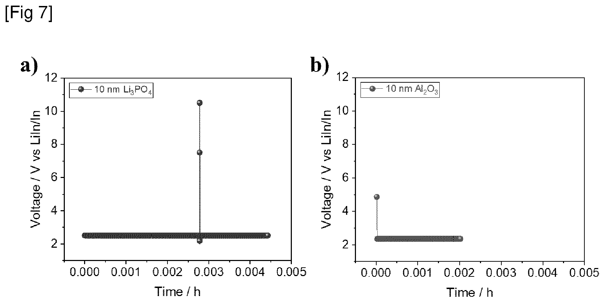

Fig 7 is the galvanostatic cycling of cells according to the comparative example 2 (Fig 7a) and the comparative example 3 (Fig 7b).

### Detailed description of embodiments

An assembly or an all-solid-state-battery according to the invention comprises at least one solid electrolyte chosen from the group consisting in a halide solid electrolyte, a sulphide solid electrolyte and a lithium oxide solid electrolyte as detailed herein after.

An electrolyte assembly according to the invention comprises a solid electrolyte chosen from the group consisting in a halide solid electrolyte, a sulphide solid electrolyte and a lithium oxide solid electrolyte.

An anode assembly according to the invention comprises a solid electrolyte chosen from the group consisting in a sulphide solid electrolyte and a lithium oxide solid electrolyte.

A cathode assembly according to the invention comprises a halide solid electrolyte.

### Halide solid electrolytes

Halide solid electrolytes may be represented by the following chemical formula

M_{3-z}(Me^{k+})_{f}X_{3-z+k*f}

wherein -3≤z≤3,
k is the valence of Me and 2≤k<6, 0≤f≤1;
- M comprises an alkali metal element, in particular including Li;
- Me comprises a metal other than an alkali metal, and
- X is a halogen.

In a particular embodiment, f is different from zero.

In a particular embodiment, Me comprises more than one metal element and k may be the average of the total of the valence of each metal element. For example, when Me includes a trivalent element and a tetravalent element in equal molar quantity, k=(3+4)/2=3.5. In particular, k may be 2, 3, 4 or 5.

It is understood that atomic vacancy can be present inside the unit cell of the halide solid electrolyte. In this case, atomic vacancy can be noted in the formula of the solid halide electrolyte as M_{3-z}(Me^{k+})_{f•y}X_{3-z+k*f} wherein • represents atomic vacancy inside the unit cell and y is the number of vacant atomic positions. In a particular embodiment, y can be f*(k-1).

In a particular embodiment, M can include Li, Na, K, Rb, Cs, or any combination thereof. For example, M can include at least one of Li and Na, or a combination thereof. In a further aspect, M can consist of at least one alkali metal element. For example, M can consist essentially of at least one alkali metal element chosen from the group consisting of Li, Na, K, Rb and Cs. In another example, M can consist of Li. In yet another example, M can consist of a combination of Li and at least one of Na, K, Rb and Cs. In still another example, M can consist of Na and at least one of Cs and Rb. In another example, M can consist of at least one of Na and Cs.

In a particular embodiment, Me can include an alkaline earth metal element, a rare earth element, a 3d transition metal, an element chosen from Zr, Ti, Sn, Th, Ge, Ta, Nb, Mo, W, Sb, Te, In Bi, Al, Ga, and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Sc, Ce, Gd, Er, La, Yb and their combinations. In a further example, Me can include a 3d transition metal, in particular chosen from Zn, Cu, V and any combination thereof. In still another example, Me can include an element chosen from Zr, Ti, Sn, Th, Ge, Ta, Nb, Mo, W, Sb, Te, In Bi, Al, Ga and any of their combinations.

In a particular embodiment, X can include a halogen, in particular chosen from CI, Br, I and any combination thereof. In an example, X can include at least one of Cl and Br. Preferably, X can consist of CI, Br or any combination thereof.

Accordingly, in embodiments of the present invention, the all solid-state-battery according to the invention, the cathode assembly according to the invention or the electrolyte assembly according to the invention may comprise a halide solid electrolyte of the formula

M_{3-z}(Me^{k+})_{f}X_{3-z+k*f}

wherein -3≤z≤3, 2≤k<6, 0≤f≤1;
- M comprises an alkali metal element, in particular including Li;
- Me comprises a divalent, trivalent, tetravalent, pentavalent or hexavalent metal element or any combination thereof, in particular Me is chosen from:
   i. alkaline earth metals, including Ba, Mg, Ca, Sr,
   ii. rare earth elements such as Y, Sc, Ce, Gd, Er, La, Yb and their combinations,
   iii. a 3d transition metal such as Zn, Cu, V, and
   iv. an element chosen from Zr, Ti, Sn, Th, Ge, Ta, Nb, Mo, W, Sb, Te, In Bi, Al, Ga, and
   v. any combination thereof, and
- X is a halogen, in particular chosen from CI, Br, I and any combination thereof;
preferably the halide solid electrolyte is Li₃InCl₆.

In a particular embodiment, the halide solid electrolyte can be represented by Li_{3-z}Me^{k+}X_{3-z+k}. When z is not 0, the complex metal halide can be non-stoichiometric. When z is 0, the complex metal halide can be stoichiometric. For example, -0.95≤z≤0.95. In another example, Me includes Y, Gd, Yb, In, Sc, Zn, Mg, Ca, Ba, Sn or a combination thereof, and X is CI, Br or a combination thereof.

In a particular embodiment, the solid halide electrolyte can be represented by Li₃MeBr₆. In another particular embodiment, the solid halide electrolyte can be represented by Li₃MeCl₆. In these embodiments, Me can consist of at least one of the above-mentioned metal elements, having a valence of 3. Me can include at least one of the above-mentioned metal elements, wherein the average valence of the at least one metal element is 3.

In another particular embodiment, the solid halide electrolyte can consist of Li, Y, and at least one of Cl and Br. For example, the solid halide electrolyte can consist of Li, Y and Cl. In another example, the solid halide electrolyte can consist of Li, Y and Br. In still another example, the solid halide electrolyte can consist of Li, Y, Cl and Br. In a particular example, the solid halide electrolyte can be represented by Li₃ₓY₁₋ₓCl₃ or Li₃ₓY₁₋ₓBr₃, wherein 0<x≤0.5.

In another particular embodiment, the solid halide electrolyte can consist of Li, Gd and at least one of Cl and Br. For example, the solid halide electrolyte can consist of Li, Gd and Cl. In another example, the solid halide electrolyte can consist of Li, Gd and Br. In still another example, the solid halide electrolyte can consist of Li, Gd, Cl and Br. In a particular example, the solid halide electrolyte can be represented by Li₃ₓGd₁₋ₓCl₃ or Li₃ₓGd₁₋ₓBr₃, wherein 0.01≤x<1.

In another particular embodiment, the solid halide electrolyte can consist of Li, In, and at least one of Cl and Br. For example, the solid halide electrolyte can consist of Li, In and Cl. In another example, the solid halide electrolyte can consist of Li, In and Br. In still another example, the solid halide electrolyte can consist of Li, In, Cl and Br. In a particular example, the solid halide electrolyte can be represented by Li₃ₓIn₁₋ₓCl₃ or Li₃ₓIn₁₋ₓBr₃, wherein 0≤x<0.5.

The solid halide electrolyte may be chosen from Li₃InCl₆, Li₃InBr₆, Li₃YCl₆, Li3YBr6, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, Li₃Y_{1/3}Zr_{1/3}Zn_{1/3}Cl₆, Li_{2.95}Na_{0.05}YBr₆, Li_{2.9}5K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li_{2.9}Y_{0.9}Ce_{0.1}Br₆, Li₃In_{0.5}Y_{0.5}Cl₆ or Li₃Y(Cl,Br)₆.

### Sulphide solid electrolyte

Sulphide solid electrolytes suitable for the present invention may include, for example, lithium sulphide, silicon sulphide, phosphorous sulphide, boron sulphide or a combination thereof.

Examples of sulphide solid electrolytes may include at least one of Li₂S-P2S5, Li₂S-P₂S₅-LiX (where X is a halogen element), U₂S-P₂S₅₋Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (where m and n each are a positive number, Z represents any of Ge, Zn, and Ga), Li₂S-GeS₂, Li₂S-SiS₂-Li₃PO₄, Li₂S-SiS₂-LiₚMO_{q} (where p and q each are a positive number, M represents at least one of P, Si, Ge, B, Al, Ga, or In).

The sulphide solid electrolyte may also be an argyrodite of the general formula Li₇₋ₓPS₆₋ₓXₓ (where 0≤x≤2 and X is a halogen element). Preferably, the sulphide solid electrolyte is the argyrodite of formula Li₆PS₅Cl.

The sulphide solid electrolyte may also be a thiophosphate such as a thio-LISICON, for example chosen from (Li)₄₋ₓGe₁₋ₓPₓS₄, wherein x ranges from 0 to 1, Li₇P₂S₈I and Li₂S-P₂S₅.

For example, the sulphide solid electrolyte may include Li₂S and P₂S₅. When a sulfide-based solid electrolyte material constituting the sulfide-based solid electrolyte includes Li₂S-P₂S₅, a molar ratio of Li₂S and P₂S₅ may, for example, range from 50:50 to 90:10.

Accordingly, in embodiments of the present invention, the all solid-state-battery according to the invention, the anode assembly according to the invention or the electrolyte assembly according to the invention may comprise a sulphide solid electrolyte chosen from the group consisting of thiophosphates and argyrodites of the formula Li₇₋ₓPS₆₋ₓXₓ wherein 0≤x≤2 and X is a halide, in particular chosen from CI, Br and I, preferably the first solid electrolyte is chosen from argyrodites and even more preferably is Li₆PS₅Cl.

### Lithium oxide solid electrolyte

Lithium oxide solid electrolytes suitable for the present invention may include, for example, NASICON, perovskites, LISICON, garnets or a combination thereof.

Accordingly, in embodiments of the present invention, the all solid-state-battery according to the invention, the anode assembly according to the invention or the electrolyte assembly according to the invention may comprise a lithium oxide solid electrolyte chosen from the group consisting of a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂, in particular the lithium oxide solid electrolyte is a garnet, preferably Li₇La₃Zr₂O₁₂.

### Anode

In an all-solid-state battery or an anode assembly according to the invention, the anode comprises an anode active material and a solid electrolyte chosen from a sulphide solid electrolyte and a lithium oxide solid electrolyte as described herein above. In particular, the anode may comprise particles comprising, preferably consisting in, the sulphide solid electrolyte.

The anode active material is a material capable of storing and releasing metal ions, in particular alkali metal ions such as Li or Na ions.

As the anode active material metals, carbon, oxides or nitrides may be used.

Metals suitable for use as an anode active material may be a single metal or an alloy such as lithium metal or a lithium alloy. Metals suitable for use as an anode active material may be chosen from silicon, tin, a silicon compound, a tin compound, lithium and a lithium alloy.

Examples of carbon suitable for use as an anode active material include natural graphite, coke, developing carbon, carbon fibres, spheroidal carbon, artificial graphite and amorphous carbon.

Accordingly, the anode active material may be chosen from
- oxides,
- nitrides,
- carbon such as natural graphite, coke, developing carbon, carbon fibres, spheroidal carbon, artificial graphite and amorphous carbon,
- metals such as silicon, tin, sodium or lithium, their compounds and their alloys,
   in particular, the anode active material is chosen from silicon, tin, lithium, their compounds and their alloys such as LiₓIn_{y} wherein x ranges from 0 to 1 and y ranges from 0 to 1, preferably the anode active material is Li_{0.5}In.

The anode active material may be present in a ASSB or an anode assembly according to the invention, in the form of particles. The median diameter of the anode active material particles may range from 0.1 µm to 100 µm. Preferably, the median diameter of the anode active material particles is larger than the median diameter of the sulphide solid electrolyte particles.

The anode may comprise
- from 50 to 70 % wt., and preferably 60 % wt. of Li_{0.5}In, and
- from 30 to 50 % wt., and preferably 40 % wt. of the sulphide solid electrolyte.

The thickness of the anode in an ASSB or an assembly according to the invention may range from 10 µm to 500 µm.

A buffer layer is deposited on the anode assembly according to the invention. In particular, the buffer layer deposited on the anode assembly according to the invention comprises, in particular consists in, a buffer material chosen from a lithium phosphate such as Li₃PO₄ or lithium phosphorus oxynitrides; a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂; preferably the buffer layer comprises, in particular consists in, Li₃PO₄.

### Cathode

In an all-solid-state battery or in a cathode assembly according to the invention, the cathode composite comprises a cathode active material and a halide solid electrolyte as described herein above. In particular, the cathode may comprise particles comprising, preferably consisting in, the halide solid electrolyte.

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide. Transition metal oxides suitable for use as a cathode active material may be, for example, LiNi_{0.6}Mn_{0.2}Co_{0.2}O₂, Li(NiCoAl)O₂ and LiCoO₂. Preferably, the cathode active material is the transition metal oxide of the formula LiNi_{0.6}Mn_{0.2}Co_{0.2}O₂.

The cathode active material may be present in a ASSB or a cathode assembly according to the invention, in the form of particles. The median diameter of the anode active material particles may range from 0.1 µm to 100 µm. Preferably, the median diameter of the anode active material particles is larger than the median diameter of the solid electrolyte particles (sulphide, halide or lithium oxide).

The cathode composite may comprise
- from 55 to 75 % wt., in particular from 60 to 70 % wt., and preferably 66.7 % wt. of cathode active material,
- from 20 to 40 % wt., in particular from 25 to 30 % wt., and preferably 28.6 % wt. of halide solid electrolyte, and optionally
- from 1 to 10 % wt., in particular from 2 to 7 % wt., and preferably 4.8 % wt. of an electron conducting carbon compound.

The thickness of the anode in an ASSB or an assembly according to the invention may range from 10 µm to 500 µm.

A buffer layer is deposited on the cathode assembly according to the invention. In particular, the buffer layer deposited on the cathode assembly according to the invention comprises, in particular consists in, a buffer material chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; and a garnet such as Li₇La₃Zr₂O₁₂; preferably the buffer layer comprises, in particular consists in, Li₃PO₄.

At least one of the anode and the cathode may comprise an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

### Buffer layer

An ASSB or an assembly according to the invention comprises at least one buffer layer. When the assembly is an electrode assembly according to the invention, it may comprise at most one buffer layer. However, in the case of an ASSB or of an electrolyte assembly according to the invention, it may comprise one or two buffer layer(s). When an object of the invention comprises two buffer layers, these layers are in contact with two opposing faces of the solid electrolyte comprised in the object of the invention.

Said buffer layer, or separation layer, is intended to prevent a direct electrochemical or chemical reaction between two components of an ASSB according to the present invention. Accordingly, the buffer layer can prevent such reactions between: the sulphide and the halide solid electrolytes, the halide solid electrolyte and the anode and/or the sulfide solid electrolyte and the cathode.

In order to fulfill this requirement, the buffer layer needs to be have a good electrochemical stability both towards lithium metal anodes and solid electrolytes, in particular halide solid electrolytes, sulfide solid electrolytes and lithium oxide solid electrolytes.

Thus, the buffer layer may comprise an oxide-based or fluoride-based compound which is chemically inert for halide, sulphide and/or lithium oxide solid electrolytes.

In a particular embodiment of the invention, the buffer layer comprises a metal oxide such as Al₂O₃, ZnO, ZrO₂, TiO₂, preferably, the buffer layer comprises Al₂O₃.

In another embodiment of the invention, the buffer layer comprises an ionic conductor chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂; and LiAlO₂.

Accordingly, in an ASSB or an assembly according to the invention, the buffer layer may comprise, in particular consists in a buffer material chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂; and Al₂O₃, more particularly the buffer layer comprises, in particular consists in, Li₃PO₄ or Al₂O₃; preferably, the buffer layer comprises, in particular consists in, Li₃PO₄.

In a particular embodiment of the present invention, the buffer layer comprises, in particular consists in, a buffer material chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; and a garnet such as Li₇La₃Zr₂O₁₂; preferably the buffer layer comprises, in particular consists in, Li₃PO₄.

Li₃PO₄ is preferred as a buffer material due to its good compatibility with both sulphide and halide solid electrolytes and acceptable ionic conductivity of Li⁺.

Furthermore, while the ionic conductivity of the buffer layer may be acceptable, it is still lower than the one of either a sulphide or halide solid electrolyte.

However, limiting the thickness of the buffer layer to less than 10 nm allows to still prevent reactions as mentioned herein above, while also mitigating the limiting aspect of the ionic conductivity of the buffer layer.

In other words, a buffer layer that is at least 10 nm thick yields an ASSB with poorer electrochemical properties.

On the other hand, a buffer layer that is finer than 0.5 nm does not sufficiently prevent the herein mentioned reactions between two components of an ASSB.

Accordingly, in an ASSB or an assembly according to the invention, the buffer layer has a thickness ranging from 0.5 to less than 10 nm.

In particular embodiments, the buffer layer layer has a thickness ranging from 0.75 to 5 nm, and preferably from 1 to 2 nm.

### Preparation process

In order to meet the thickness requirement for a buffer layer in an ASSB or an assembly according to the present invention, the buffer layer may be deposited onto a surface by a vapor deposition based method.

Such vapor deposition based methods are for example, Physical Vapor Deposition (PVD) and Chemical Vapor Deposition (CVD).

The buffer layer may also be deposited by Atomic Layer Deposition (ALD). ALD allows a particularly fine tuning of the thickness of the buffer layer.

Accordingly, the invention also pertains to a process of making an all-solid-state-battery or an assembly according to the invention, wherein the buffer layer is deposited by a vapor deposition based method such as Physical Vapor Deposition, Chemical Vapor Deposition or by Atomic Layer Deposition, preferably by Atomic Layer Deposition, onto at least one substrate chosen from the solid electrolyte, the anode composite and the cathode composite.

In a particular embodiment of the process according to the invention, the buffer layer is deposited onto a powder substrate or onto a densified substrate.

According to this embodiment, the powder substrate may be a component of an assembly or an ASSB according to the invention before its densification. Hence, the powder substrate may be the solid electrolyte, the anode and/or the cathode composite.

When the buffer material is deposited onto a powder substrate, a coated powder substrate is obtained. Once said coated powder substrate is densified, the buffer material constitutes a buffer layer on at least one surface of the obtained densified material.

In order to provide lithium in the buffer layer, for example when the buffer layer is Li₃PO₄, a precursor of the formula LiOR wherein R is a C₁-C₆ alkyl may be used as a precursor, preferably lithium *tert*-butoxide is used as a precursor to provide lithium.

In order to provide phosphate in the buffer layer, for example when the buffer layer is Li₃PO₄, a precursor of the formula OP(OR)₃ wherein R is a C₁-C₃ alkyl may be used as a precursor, preferably OP(OCH₃)₃ is used as a precursor.

In order to provide aluminum in the buffer layer, for example when the buffer layer is Al₂O₃, a precursor of the formula AlR₃ wherein R is a C₁-C₃ alkyl may be used as a precursor, preferably Al(CH₃)₃ is used as a precursor.

In order to provide oxygen in the buffer layer, for example when the buffer layer is Al₂O₃, ozone may be used as a precursor.

In a particular embodiment of the invention, the buffer layer is deposited by Atomic Layer Deposition and the Atomic Layer Deposition reactor is set at a temperature:
- ranging from 85 °C to 185 °C, in particular from 100 °C to 170 °C, and preferably at 150 °C, or
- ranging from 200 °C to 400 °C, in particular from 250 °C to 350 °C, and preferably at 300 °C.

The electrodes and electrolytes of an ASSB or an assembly according to the invention are prepared according to processes known by the person skilled in the art and illustrated in the examples below.

### Comparative example 1

### Synthesis of Solid Sulphide Electrolyte

Li₆PS₅Cl was synthesized by the annealing of stoichiometric mixture of Li₂S, P₂S₅, and LiCI in an Al₂O₃ crucible.

The powder mixture was placed in the crucible and sealed under vacuum in a quartz tube, and finally annealed at 550 °C at a heating rate of 5 °C/min for 72 hours followed by natural cooling to room temperature.

### Synthesis of Solid Halide Electrolyte

Li₃InCl₆ was prepared by dissolution of InCl₃ and LiCI in distilled water. The precursors were left stirring overnight continuously at room temperature and the obtained clear solution was naturally dried at 100 °C.

A white powder was obtained and subsequently dried firstly at 100 °C for 24 hours and then at 200 °C for 24 hours under dynamic vacuum (P < 1 mbar) followed by natural cooling to room temperature.

### Synthesis of the Cathode Composite

A cathode composite was prepared by hang-ground mixture of LiNi_{0.6}Mn_{0.2}Co_{0.2}O₂(NMC622):Li₃InCl₆:VGCF (70:30:5 in weight ratio).

### Battery assembly

The battery assembly was carried out in a cell consisting of a cylindrical polyetherimide (PEI) cell body and two stainless steel pistons of 8 mm diameter.

The assembling procedure was carried out under argon atmosphere in a glove box ([O₂] < 1 ppm, [H₂O] < 1 ppm).

The two-electrode cell was assembled as follows.

16 to 18 mg/cm² of cathode composite (NMC622/Li₃InCl₆/VGCF) was spread onto a surface of Li₆PS₅Cl solid electrolyte and next, a mixture of Li_{0.5}In and Li₆PS₅Cl (in a 60:40 weight ratio) was added the opposing side of Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

### Example 1 according to the invention

The solid sulphide electrolyte, solid halide electrolyte and the cathode composite were prepared as described herein above for the comparative example 1.

### Atomic Layer Deposition

Nanometer-thick Li₃PO₄ films were grown in a R200 advanced ALD reactor from Picosun under an argon pressure around 2 mbar. Argon was used as the carrier and purging gas.

Lithium *tert*-butoxide (LiO*t*Bu) and trimethyl phosphate (TMPO) precursors were used respectively as lithium and phosphate sources. The LiO*t*Bu precursor was purchased from Strem Chemicals (purity 98%) while TMPO precursor was purchased from Sigma-Aldrich (purity 99%). The adapted sublimation temperatures were 185 °C and 85 °C respectively.

The temperature of the ALD reactor was set to 150 °C and the number of ALD cycles was modified to tune the thickness of the buffer layer. 17 ALD cycles were performed to obtain a 1 nm thick buffer layer. 34 ALD cycles were performed to obtain a 2 nm thick buffer layer.

TMPO and then LiO*t*Bu were pulsed into the chamber alternatively with respective pulse times of 6 seconds and 3 seconds separated by 8 seconds of argon purge.

A Li₆PS₅Cl solid electrolyte pellet, coated with Li₃PO₄ on one of its sides was obtained.

### Battery assembly

The battery assembly was carried out in a cell consisting of a cylindrical polyetherimide (PEI) cell body and two stainless steel pistons of 8 mm diameter.

The assembling procedure was carried out under argon atmosphere in a glove box ([O₂] < 1 ppm, [H₂O] < 1 ppm).

The two-electrode cell was assembled as follows.

16 to 18 mg/cm² of cathode composite (NMC622/Li₃InCl₆/VGCF) was spread onto Li₃PO₄ coated surface of Li₆PS₅Cl solid electrolyte and next, a mixture of Li_{0.5}In and Li₆PS₅Cl (in a 60:40 weight ratio) was added onto uncoated side of Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

### Comparative Example 2

The solid sulphide electrolyte, solid halide electrolyte and the cathode composite were prepared as described herein above for the comparative example 1.

### Atomic Layer Deposition

Nanometer-thick Li₃PO₄ films were grown in a R200 advanced ALD reactor from Picosun under an argon pressure around 2 mbar. Argon was used as the carrier and purging gas.

Lithium *tert*-butoxide (LiO*t*Bu) and trimethyl phosphate (TMPO) precursors were used respectively as lithium and phosphate sources. The LiO*t*Bu precursor was purchased from Strem Chemicals (purity 98%) while TMPO precursor was purchased from Sigma-Aldrich (purity 99%). The adapted sublimation temperatures were 185 °C and 85 °C respectively.

The temperature of the ALD reactor was set to 150 °C with a growth rate of 0.6 Angtröms per cycle. 167 cycles were thus performed to obtain a 10 nm thick buffer layer.

TMPO and then LiO*t*Bu were pulsed into the chamber alternatively with respective pulse times of 6 seconds and 3 seconds separated by 8 seconds of argon purge.

A Li₆PS₅Cl solid electrolyte pellet, coated with a 10 nm buffer layer of Li₃PO₄ on one of its sides was obtained.

### Battery assembly

The battery assembly was carried out in a cell consisting of a cylindrical polyetherimide (PEI) cell body and two stainless steel pistons of 8 mm diameter.

The assembling procedure was carried out under argon atmosphere in a glove box ([O₂] < 1 ppm, [H₂O] < 1 ppm).

The two-electrode cell was assembled as follows.

16 to 18 mg/cm² of cathode composite (NMC622/Li₃InCl₆/VGCF) was spread onto Li₃PO₄ coated surface of Li₆PS₅Cl solid electrolyte and next, a mixture of Li_{0.5}In and Li₆PS₅Cl (in a 60:40 weight ratio) was added onto uncoated side of Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

### Example 2 according to the invention

The solid sulphide electrolyte, solid halide electrolyte and the cathode composite were prepared as described herein above for the comparative example 1.

### Atomic Layer Deposition

Nanometer-thick Li₃PO₄ films were grown in a R200 advanced ALD reactor from Picosun under an argon pressure around 2 mbar. Argon was used as the carrier and purging gas.

Lithium *tert*-butoxide (LiO*t*Bu) and trimethyl phosphate (TMPO) precursors were used respectively as lithium and phosphate sources. The LiO*t*Bu precursor was purchased from Strem Chemicals (purity 98%) while TMPO precursor was purchased from Sigma-Aldrich (purity 99%). The adapted sublimation temperatures were 185 °C and 85 °C respectively.

The temperature of the ALD reactor was set to 300 °C with a growth rate of 0.6 Angtröms per cycle. 17 cycles were thus performed to obtain a 1 nm thick buffer layer.

TMPO and then LiO*t*Bu were pulsed into the chamber alternatively with respective pulse times of 6 seconds and 3 seconds separated by 8 seconds of argon purge.

A Li₆PS₅Cl solid electrolyte pellet, coated with Li₃PO₄ on its two opposing sides was obtained.

### Battery assembly

The battery assembly was carried out in a cell consisting of a cylindrical polyetherimide (PEI) cell body and two stainless steel pistons of 8 mm diameter.

The two-electrode cell was assembled as follows.

16 to 18 mg/cm² of cathode composite (NMC622/Li₃InCl₆/VGCF) was spread onto a first Li₃PO₄ coated surface of the Li₆PS₅Cl solid electrolyte pellet and next, a mixture of Li_{0.5}In and Li₆PS₅Cl (in a 60:40 weight ratio) was added onto the opposing Li₃PO₄ coated side of the Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

All assembling procedures were carried out under argon atmosphere in a glove box ([O₂] < 1 ppm, [H₂O] < 1 ppm).

### Example 3 according to the invention

The solid sulphide electrolyte, solid halide electrolyte and the cathode composite were prepared as described herein above for the comparative example 1.

### Atomic Layer Deposition

Nanometer-thick Al₂O₃ films were grown in a R200 advanced ALD reactor from Picosun under an argon pressure around 2 mbar. Argon was used as the carrier and purging gas.

Trimethyl aluminum (TMA) and ozone (O₃) precursors were used respectively as aluminum and oxygen sources. The TMA precursor was purchased from STREM Chemical (purity 98%) while the O₃ precursor was synthetized by using an ozone AC series generator model AC-Bench 2025 from In USA Inc. with a mixture of 99.5 % of O₂ and 0.5 % of N₂.

The temperature of the ALD reactor was set to 150 °C with a growth rate of 1.4 Angtröms per cycle. 7 cycles were thus performed to obtain a 1 nm thick buffer layer.

TMA and O₃ were pulsed into the chamber alternatively with respective pulse times of 0.3 second and 0.5 second separated by 5 second of argon purge.

A Li₆PS₅Cl solid electrolyte pellet, coated with Al₂O₃ on one of its sides was obtained.

### Battery assembly

The battery assembly was carried out in a cell consisting of a cylindrical polyetherimide (PEI) cell body and two stainless steel pistons of 8 mm diameter.

The two-electrode cell was assembled as follows.

16 to 18 mg/cm² of cathode composite (NMC622/Li₃InCl₆/VGCF) was spread onto Al₂O₃ coated surface of the Li₆PS₅Cl solid electrolyte pellet and next, a mixture of Li_{0.5}In and Li₆PS₅Cl (in a 60:40 weight ratio) was added onto the uncoated side of the Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

All assembling procedures were carried out under argon atmosphere in a glove box ([O₂] < 1 ppm, [H₂O] < 1 ppm).

### Comparative example 3

The solid sulphide electrolyte, solid halide electrolyte and the cathode composite were prepared as described herein above for the comparative example 1.

### Atomic Layer Deposition

Nanometer-thick Al₂O₃ films were grown in a R200 advanced ALD reactor from Picosun under an argon pressure around 2 mbar. Argon was used as the carrier and purging gas.

Trimethyl aluminum (TMA) and ozone (O₃) precursors were used respectively as aluminum and oxygen sources. The TMA precursor was purchased from STREM Chemical (purity 98%) while the O₃ precursor was synthetized by using a ozone AC series generator model AC-Bench 2025 from In USA Inc. with a mixture of 99.5 % of O₂ and 0.5 % of N₂.

The temperature of the ALD reactor was set to 150 °C with a growth rate of 1.4 Angtröms per cycle. 71 cycles were thus performed to obtain a 10 nm thick buffer layer.

TMA and O₃ were pulsed into the chamber alternatively with respective pulse times of 0.3 second and 0.5 second separated by 5 second of argon purge.

A Li₆PS₅Cl solid electrolyte pellet, coated with a 10 nm thick buffer layer of Al₂O₃ on one of its sides was obtained.

### Battery assembly

The battery assembly was carried out in a cell consisting of a cylindrical polyetherimide (PEI) cell body and two stainless steel pistons of 8 mm diameter.

The two-electrode cell was assembled as follows.

16 to 18 mg/cm² of cathode composite (NMC622/Li₃InCl₆/VGCF) was spread onto Al₂O₃ coated surface of the Li₆PS₅Cl solid electrolyte pellet and next, a mixture of Li_{0.5}In and Li₆PS₅Cl (in a 60:40 weight ratio) was added onto the uncoated side of the Li₆PS₅Cl solid electrolyte pellet as counter electrode.

Finally, the whole stack was further densified at 4 t/cm² for 15 minutes. After the compression, a pressure of 1 t/cm² was applied on the fully assembled cell for electrochemical studies.

All assembling procedures were carried out under argon atmosphere in a glove box ([O₂] < 1 ppm, [H₂O] < 1 ppm).

### Electrochemical testing

For all of the examples, the electrochemical testing were carried out in a cell consisting of a cylindrical polyetherimide (PEI) cell body and two stainless steel pistons of 8 mm diameter.

All the electrochemical cycling procedures were carried out under argon atmosphere in a glove box ([O₂] < 1 ppm, [H₂O] < 1 ppm) at room temperature unless specified otherwise.

### Conductivity measurements

Ionic conductivity measurements were performed by electrochemical impedance spectroscopy (EIS) at OCV applying excitation amplitude of 50 mV in a frequency range between 7 MHz and 1 Hz with 15 points per decade with an MTZ impedance analyzer (BioLogic).

The results for a 1 nm thick buffer layer of Li₃PO₄ are presented in Fig. 2 which show that the presence of the buffer layer still enables lithium ion conduction while providing a slight resistance.

Fig. 6 demonstrates that 10 nm thick buffer layers of Li₃PO₄ (Fig 6a) and Al₂O₃ (Fig 6b) lead to resistances that are respectively greater than 300 kΩ and greater than 150 kΩ.

Therefore, a buffer layer of at least 10 nm leads to a poor ionic conductivity and thus an unsatisfactory ASSB.

### Galvanostatic cycling

Galvanostatic cycling studies were carried out at room temperature at C/20 (C correspond to 1 mole of Li per mole of active material in 1 h). All electrochemical measurements were conducted with a VMP3 potentiostat/galvanostat (BioLogic) controlled with EC-Lab software.

Fig. 3 depicts the cycling performance of the cell stack of the example 1 according to the invention between 2.1 and 3.6/3.7/3.8 V vs. LiIn/In (2.7 and 4.2/4.3/4.4 V vs. LI⁺/Li). The first cycle curve is reported in Figs 3a) and 3c) while the capacity retention is reported in Figs. 3b) and 3d), for the cells containing a buffer layer 2 nm and 1 nm thick respectively. These figures demonstrate low irreversible capacity and low polarization after the initial cycle and a stable capacity retention over cycling for both thicknesses of the buffer layer.

Fig. 5 depicts the cycling performance of the cell stack of the example 2 according to the invention between 2.1 and 3.6 V vs. LiIn/In. The cycle curves are reported in Fig 5a) while the capacity retention over 60 cycles is reported in Fig. 5b). These figures also demonstrate low irreversible capacity and low polarization after the initial cycle and a stable capacity retention over cycling for a cell containing two buffer layers.

Fig. 4 depicts the cycling performance of the cell stack according to the comparative example 1, i.e. without a buffer layer, in identical conditions to the examples according to the invention. The first cycle curve is reported in Fig. 4a) while the capacity retention is reported in Fig. 4b), both under argon and in an air-tight cell under ambient atmosphere. These figures demonstrate that in the absence of a buffer layer, the cell demonstrate a pronounced capacity fading over cycling. This fading is associated with interfacial roadblocks developing due to the lack of buffer layer. It is demonstrated that this fading is not due to the cell setup since it allows to test cycling performance of the materials under ambient atmosphere providing air tightness.

Fig. 7 depicts the cycling performance of the cell stacks according to the comparative examples 2 and 3, i.e. comprising a 10 nm thick buffer layer of Li₃PO₄ (Fig 7a) or Al₂O₃ (Fig 7b), in identical conditions to the examples according to the invention. These figures show that with a buffer layer that is at least 10 nm thick, when a current is applied to the cells, the measured potential is the open-circuit voltage (OCV). As observed on Fig 6, this is due to the very low conductivity of the solid electrolyte together with a 10 nm thick buffer layer.

These results demonstrates that an assembly according to the invention, which can be assembled into an ASSB according to the invention, allows to obtain a satisfactory ionic conduction while alleviating the consequences of the instability of the different components of an ASSB towards each other, i.e. retain a stable capacity over the lifespan of the assembly or of the ASSB in which it is containe

## Claims

1. An all-solid-state-battery comprising:
- an anode comprising an anode active material and a first solid electrolyte,
- a cathode composite comprising a cathode active material and a second solid electrolyte,
- a solid electrolyte comprising a solid electrolyte material chosen from the group consisting in the first and the second solid electrolyte, and
- at least one buffer layer, in particular one or two buffer layer(s), in contact with a surface of the solid electrolyte material, wherein when the solid electrolyte material is the first solid electrolyte, one buffer layer is at the interface of said electrolyte with the cathode composite, and
when the solid electrolyte material is the second solid electrolyte, one buffer layer is at the interface of said electrolyte with the anode, wherein the first electrolyte is chosen from a sulphide solid electrolyte and a lithium oxide solid electrolyte,
wherein the second electrolyte is a halide solid electrolyte, and wherein the buffer layer has a thickness ranging from 0.5 to less than 10 nm.

2. An assembly comprising:
- a solid electrolyte comprising a solid electrolyte material chosen from the group consisting of a halide solid electrolyte, a sulphide solid electrolyte and a lithium oxide solid electrolyte, and
- at least one buffer layer, in particular one or two buffer layer(s), in contact with a surface of the solid electrolyte material,
wherein the buffer layer has a thickness ranging from 0.5 to less than 10 nm.

3. An assembly comprising:
- an anode comprising an anode active material and a solid electrolyte chosen from a sulphide solid electrolyte and a lithium oxide solid electrolyte, and
- a buffer layer in contact with a surface of the anode composite, wherein the buffer layer has a thickness ranging from 0.5 to less than 10 nm.

4. An assembly comprising:
- a cathode composite comprising a cathode active material and a halide solid electrolyte, and
- a buffer layer in contact with a surface of the cathode composite, wherein the buffer layer has a thickness ranging from 0.5 to less than 10 nm.

5. The all-solid-state-battery according to claim 1 or the assembly according to the claim 3, wherein the anode active material is chosen from:
- oxides,
- nitrides,
- carbon such as natural graphite, coke, developing carbon, carbon fibres, spheroidal carbon, artificial graphite and amorphous carbon,
- metals such as silicon, tin, sodium or lithium, their compounds and their alloys,
in particular, the anode active material is chosen from silicon, tin, lithium, their compounds and their alloys such as LiₓIn_{y} wherein x ranges from 0 to 1 and y ranges from 0 to 1, preferably the anode active material is Li_{0.5}In.

6. The all-solid-state-battery according to any of claims 1 and 5 or the assembly according to any of claims 3 and 5, wherein the anode comprises:
- from 50 to 70 % wt., and preferably 60 % wt. of Li_{0.5}In, and
- from 30 to 50 % wt., and preferably 40 % wt. of the sulphide solid electrolyte.

7. The all-solid-state-battery according to any of claims 1, 5 and 6 or the assembly according to claim 4, wherein the cathode active material is chosen from transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not, in particular the cathode active material is a transition metal oxide such as a lithium-cobalt oxide, a lithium-nickel-cobalt-aluminium oxide or a lithium-nickel-manganese-cobalt-oxide, preferably of the formula LiNi_{0.6}Mn_{0.2}Co_{0.2}O₂.

8. The all-solid-state-battery according to any of claims 1 and 5 to 7 or the assembly according to any of claims 4 or 7, wherein the cathode composite comprises:
- from 55 to 75 % wt., in particular from 60 to 70 % wt., and preferably 66.7 % wt. of cathode active material,
- from 20 to 40 % wt., in particular from 25 to 30 % wt., and preferably 28.6 % wt. of halide solid electrolyte, and optionally
- from 1 to 10 % wt., in particular from 2 to 7 % wt., and preferably 4.8 % wt. of an electron conducting carbon compound.

9. The all-solid-state-battery according to claims 1 and 5 to 8 or the assembly according to any of claims 3 to 8, wherein at least one electrode comprises an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

10. The all-solid-state-battery according to claim 1 and 5 to 9 or the assembly according to any of claims 2, 4 and 7 to 9, wherein the halide solid electrolyte is of the formula
M_{3-z}(Me^{k+})_{f}X_{3-z+k*f}
wherein -3≤z≤3, 2≤k<6, 0≤f≤1;
- M comprises an alkali metal element, in particular including Li;
- Me comprises a divalent, trivalent, tetravalent, pentavalent or hexavalent metal element or any combination thereof, in particular Me is chosen from:
i. alkaline earth metals, including Ba, Mg, Ca, Sr,
ii. rare earth elements such as Y, Sc, Ce, Gd, Er, La, Yb and their combinations,
iii. a 3d transition metal such as Zn, Cu, V, and
iv. an element chosen from Zr, Ti, Sn, Th, Ge, Ta, Nb, Mo, W, Sb, Te, In Bi, Al, Ga, and
v. any combination thereof, and
- X is a halogen, in particular chosen from Cl, Br, I and any combination thereof;
preferably the halide solid electrolyte is Li₃InCl₆.

11. The all-solid-state-battery according to claim 1 and 5 to 10 or the assembly according to any of claims 2, 3 to 6 and 9, wherein the sulphide solid electrolyte is chosen from the group consisting of thiophosphates and argyrodites of the formula Li₇₋ₓPS₆₋ₓXₓ wherein 0≤x≤2 and X is a halide, in particular chosen from Cl, Br and I, preferably the first solid electrolyte is chosen from argyrodites and even more preferably is Li₆PS₅Cl.

12. The all-solid-state-battery according to claim 1 and 5 to 11 or the assembly according to any of claims 2, 3 to 6, 9 and 11, wherein the lithium oxide solid electrolyte is chosen from the group consisting of a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂, in particular the lithium oxide solid electrolyte is a garnet, preferably Li₇La₃Zr₂O₁₂.

13. The all-solid-state-battery according to claim 1 and 5 to 12 or the assembly according to any of claims 2 to 12, wherein the buffer layer has a thickness ranging from 0.75 to 5 nm, and preferably from 1 to 2 nm.

14. The all-solid-state-battery according to claim 1 and 5 to 13 or the assembly according to any of claims 2 to 13, wherein the buffer layer comprises, in particular consists in, a buffer material chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; a garnet such as Li₇La₃Zr₂O₁₂; and Al₂O₃, more particularly the buffer layer comprises, in particular consists in, Li₃PO₄ or Al₂O₃; preferably, the buffer layer comprises, in particular consists in, Li₃PO₄.

15. A process of making the all-solid-state-battery according to any of claims 1 and 5 to 14 or the assembly according to any of claims 2 to 14, wherein the buffer layer is deposited by a vapor deposition based method such as Physical Vapor Deposition, Chemical Vapor Deposition or by Atomic Layer Deposition, preferably by Atomic Layer Deposition, onto at least one substrate chosen from the solid electrolyte, the anode composite and the cathode composite.

16. The process according to claim 15, wherein the buffer layer is deposited onto a powder substrate or onto a densified substrate.

17. The process according to any of claim 15 or 16, wherein the buffer layer is deposited by Atomic Layer Deposition and the Atomic Layer Deposition reactor is set at a temperature:
- ranging from 85 °C to 185 °C, in particular from 100 °C to 170 °C, and preferably at 150 °C, or
- ranging from 200 °C to 400 °C, in particular from 250 °C to 350 °C, and preferably at 300
